# EUROPEAN PATENT APPLICATION

(11) **EP 1 672 487 A1**
(43) Date of publication of application: **21.06.2006**
(21) Application number: 04078388.8
(22) Date of filing: 14.12.2004
(51) Int. Cl.: G06F 9/445

(54) **Method and means for an efficient memory usage**

(71) Applicant: Sony Ericsson Mobile Communications AB, 221 88 Lund (SE)
(72) Inventor: Bolanowski, Wladyslaw, 230 40 Bara (SE); Jönsson, Ola, 252 27 Helsingborg (SE)
(74) Representative: Lindberg, Olle Nils Olof

(57) **Abstract**

The present invention relates to an efficient utilization of data storage resources in a data processing device, particularly a mobile terminal, comprising a CPU, a ROM-memory with stored boot code, a RAM-memory and a flash-memory, and provides a method comprising the following steps:
a) creating a main program executable for said CPU,
b) dividing said main program into pages with a fixed data block size for an efficient execution in said CPU,
c) compressing said main program on a per page basis,
d) creating a pre-execution program comprising a decompression algorithm for said compressed main program,
e) storing said pre-execution program and said compressed main program in said flash memory,
f) booting said CPU by loading said boot code into said CPU from said ROM,
g) executing said pre-execution program in said CPU,
h) decompressing at least part of said main program on a per page basis and storing a number of decompressed pages in said RAM,
i) executing said main program by loading decompressed pages from said RAM-memory into said CPU.

## Description

### Technical Field

The present invention relates generally to methods and means for an efficient utilization of data storage resources in a data processing device, and more specifically to the usage of such methods and means in a mobile terminal.

### Background

In the mobile phone system setup there is a possibility to store the executable code in a flash memory and execute code in RAM. In such a case there is a possibility to use paging on demand technique in order to reduce amount of RAM that is needed for the code execution. Paging on demand is a well established technique for improving the efficiency of memory utilisation. Paging on demand memory technique allows the system to execute code in just a fraction of the total code size (50% or less), by the creation and usage of virtual memories. A problem with this technique, for example in mobile phones or terminals, is that the executable code is quite big in size. Storage of the "big size" code in flash memory provides a considerable contribution into the cost of flash memory for the phone's production. Memories are available in discrete, predefined sizes like 16 MB, 32 MB, etc. When you are passing into a next size, there will be a considerable additional cost that the phone has to take. A general objective is to reduce the manufacturing cost of a mobile terminal having a given performance.

### Summary of the invention

It is an object of the present invention to provide methods and means that solves or alleviates the problems/drawbacks discussed above and which are capable of further enhancing the efficient usage of the installed memory resources. According to a first aspect, the present invention achieve these objects by providing a method for an efficient utilization of data storage resources in a data processing device comprising a CPU, a ROM-memory with stored boot code, a RAM-memory and a flash-memory, wherein said method comprises the following steps:
a) creating a main program executable for said CPU,
b) dividing said main program into pages with a fixed data block size for an efficient execution in said CPU,
c) compressing said main program on a per page basis,
d) creating a pre-execution program comprising a decompression algorithm for said compressed main program,
e) storing said pre-execution program and said compressed main program in said flash memory,
f) booting said CPU by loading said boot code into said CPU from said ROM,
g) executing said pre-execution program in said CPU,
h) decompressing at least part of said main program on a per page basis and storing a number of decompressed pages in said RAM,
i) executing said main program by loading decompressed pages from said RAM-memory into said CPU.

In one embodiment, said step i) of executing the main program further comprises the utilisation of paging on demand for said RAM-memory by using said flash memory as a virtual memory for said RAM-memory.

In one embodiment, the method said step c) further comprises the step of creating a mapping-page-table with stored page bit size relationships of compressed/uncompressed size for each page to be used for said decompression algorithm in step d).

In one embodiment, said step a) of creating a main program executable for said CPU further comprises the step of providing an operating system as part of said main program.

In one embodiment, said step c) of compressing said main program on a per page basis is realised by an algorithm comprising a Huffman-compression algorithm.

According to a second aspect, the invention provides a data processing device comprising a bootable CPU for executing at least a main program stored in a memory in form of program code segments of a pre-established fix length forming pages, a ROM-memory with stored code segments for booting said CPU, a RAM-memory and a flash-memory, said main program being stored in said flash memory, said flash-memory interconnected with said RAM-memory for the transfer and storage of at least some pages from said flash-memory to said RAM-memory, said CPU arranged to fetch, load and execute program code stored in said memories and to store data at least in said RAM wherein said main program is stored in said flash-memory in form of compressed pages being compressed on a per pages basis, said flash-memory further having a stored pre-execution program comprising program code means which make the CPU execute, when loaded in said CPU being booted, a procedure realising the following steps:
- loading said pre-execution program from said flash-memory into said CPU,
- decompressing, on a per pages basis, at least part of said main program stored in said flash-memory and copying said decompressed pages into said RAM,
- executing said decompressed pages in said RAM by loading them in said CPU.

In one embodiment, the data processing device according to the invention is further devised with program code means which make said CPU, when loaded in said CPU, execute a procedure realising the method according to the invention.

According to a third aspect, the present invention provides the data processing device according to the invention to be used in a mobile terminal.

These and other features, aspects and advantages of the present invention will become better understood with reference to the following description and claims when read together with the accompanying drawings.

Even though the invention has been summarised above, the invention is defined by the appended claims 1-8.

### Brief description of the drawings

- Figure 1: is a functional block diagram of a mobile terminal according to the present invention.
- Figure 2: is a flowchart diagram for the method according to the invention.

### Detailed description of preferred embodiments

The invention shall now be described in more detail with reference to the accompanying drawings.

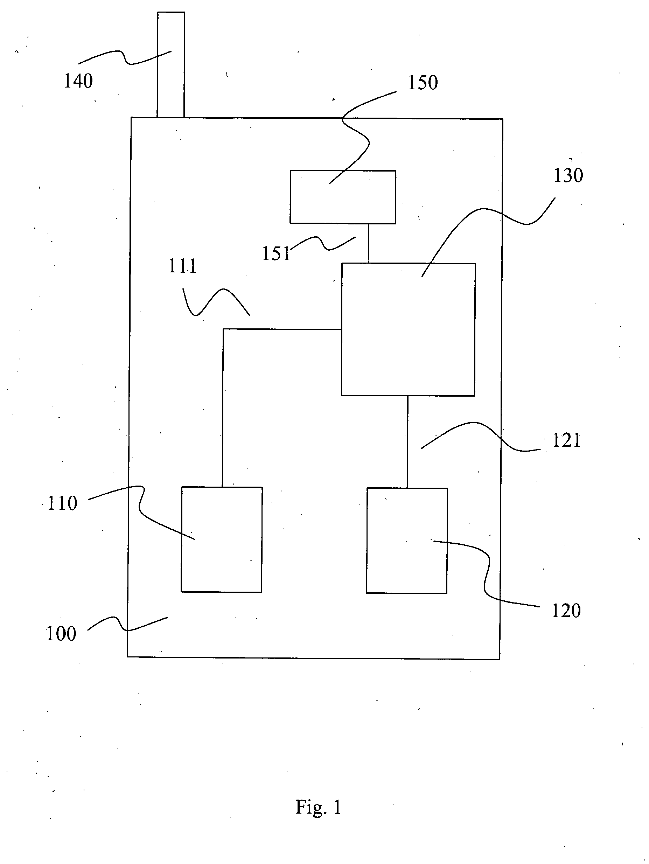

Figure 1 is a block diagram illustrating the main functional blocks of a mobile terminal 100 according to the invention. The mobile terminal comprises a CPU or processor, 130, e.g. a processor realised in conventional ARM- architecture, a flash-memory 110 and a RAM-memory 120. The terminal 100 has an antenna 140 for establishing a radio link communication with a cellular radio network. The antenna 140 is interconnected with transceiver means (not shown in Fig. 1) controlled by CPU 130 in a conventional manner. The mobile terminal further normally comprises a number of conventional functional blocks, e.g. clock, display, keyboard etc, not illustrated in Fig. 1 for the sake of clarity. Flash memory 110 may be realised as a NOR-flash-memory, providing XIP-functionality (eXecute In Place), or as a NAND-flash-memory, which today lack the XIP-feature. The flash memory is according to the invention interconnected with RAM-memory 120 by busses 112, RAM-memory 120 is interconnected with CPU 130 by busses 121 and, as an option, flash memory 110 may be interconnected with CPU by busses 111. The mobile terminal 100 normally comprises a separate hardware ROM-memory with stored program code for booting the CPU 130. ROM-memory 150 is interconnected with the CPU via the busses 151. Busses 111, 121 and 151 are conventional control- and address- busses enabling the CPU to fetch/store data from/to the memories in a conventional manner.

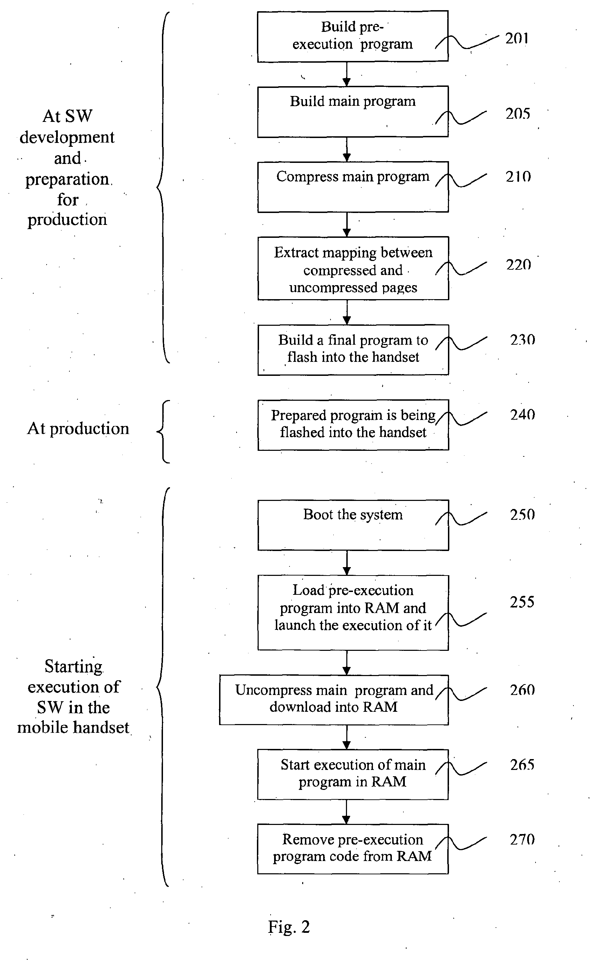

The overall method for realising and using the invention shall now be described with reference to Fig. 2. The overall method according to the invention comprises three main steps at three situations; the main step of developing software and general preparations before production of the mobile terminal, illustrated by steps 201-220 in Fig.2, the main step of storing the developed software in flash memory 110 at the production of the mobile terminal 100, illustrated by step 240 in Fig. 2, and the main step of executing the developed software, stored in flash memory 110 in the mobile terminal 100, illustrated by steps 250-270 in Fig. 2.

In step 201, a so called pre-executing program is developed. The pre-execution program comprises code segments defining a logic for how to decompress the code stored in flash memory 110, as described below, how to copy this decompressed code into RAM-memory 120 and how to launch (i.e. execute) the software from RAM 120. It should be noted that this pre-executing part of SW is assumed to execute code without any access to the operating system.

In step 205, the actual main program for the mobile terminal 100 is developed. The main program normally comprises both operating system/s as well as all the applications supported by the mobile terminal 100, in a conventional manner.

In step 210, a compression program is created suitable for the compression of relatively short data blocks of fixed predetermined length, here referred to as pages. The data length of the pages is optimised for an efficient execution in the CPU/processor 130, e.g. to 4 Kbyte in case of an ARM-architecture-processor. Various conventional compression algorithms could be used according to the invention, e.g. the Zip-algorithm, compression algorithms used by Redbend, the Huffman-algorithm etc. In a preferred embodiment, the compression algorithm is optimised in accordance with the lenght of the pages, meaning that a general Huffman-algorithm optimised for the. data page lenght, of e.g. 4 Kbyte in above example, is to prefer over e.g. a conventional Zip-algorithm, since this algorithm is optimised for longer data blocks and also requires relatively much memory. The Huffman algorithm is a well known algorithm and it is obvious for a person skilled in the art how to optimise it for a specific page lenght. However, many different combinations and possibilities exist and the present invention is not restricted to the Huffman-algorithm. The main program is thereafter compressed, page by page, using said compression program created in step 210. The resulting main program code is thereafter normally concatenated into one program code.

In step 220, a mapping is carried out. This mapping must be able to extract and provide enough information for the decompressing algorithm, created in step 201, to work properly and also enable the paging mechanism, described in more detail below, to work properly. This mapping is normally carried out by creating a mapping-page-table comprising the different relationships of data lenght for the individually compressed pages, i.e. the degree of compression for the individual pages along with relevant memory addressing information. This mapping will be the base for the effective page-table in a run-time system.

In step 230, a final program code to "flash" into the flash-memory 110 is created. This final code comprises the pre-execution program (not compressed), compressed main program and mapping information, which are normally concatenated. In one embodiment, the final program code is signed with a certificate, for reasons of safety. This procedure will hinder the storage of unauthorised, "pirate"- programs in the mobile phone and thereby fraud.

In step 240, the final program code developed in steps 201-220 is checked regarding authorisation and stored (flashed) in flash memory 110. This step is carried out during the manufacturing process of the mobile terminal, 100.

In step 250, the CPU 130 is booted in a conventional manner by executing the initial boot cod stored in ROM-memory 150.

In step 255, the method according to the invention carries out two different steps depending on weather the flash memory is a NAND-flash (i.e. lacking the XIP-functinality), or a NOR-flash memory (having XIP-functionality). In one embodiment, in which the flash memory 110 is a NAND-memory, the ROM boot code will copy the pre-execution program and the compressed/decompressed mapping table into RAM and launch execution of the pre-execution code in RAM. In another embodiment, in which said flash memory 110 is a NOR-flash memory, the ROM boot code stored in the memory 150 will give the CPU control of the pre-execution program. Thus, the pre-execution code is launched in step 255.

In step 260, the main program is decompressed and downloaded into RAM memory 120. The decompression code present in the pre-execution code will now decompress the main program, also comprising the paging mechanism, and download it gradually into RAM 120, in accordance with conventional paging-technique. The flash-memory 110 will thus function as a virtual memory for RAM-memory 120 when the main program is executed.

In step 265, the main program is executed. As the last action, the pre-execution program will launch the execution of the main program, i.e. the stored main program pages in RAM 120. The main program code will eventually get page-faults, which will activate the paging mechanism that will use the compressed/uncompressed mapping to get the compressed page, and uncompress it to the right place, i.e. fetching the right compressed page from flash-memory 110, decompress it, and copy it into the right address in RAM memory 120.

In this way, the code can be compressed before if is flashed into the phone and decompressed before it is downloaded into RAM for execution. Combined with the paging on demand technique, the compression is made so that the page unit is preserved in both phases. This means that both compression and decompression is to be made for each page.

The three phases of the method according to the invention, namely; preparation, launching the system and page fault handling, are further discussed below.

### Preparation:

This phase basically comprises the following main steps:
1 Each page of the uncompressed program will be individually compressed.
2 After compression of each page, the page table containing starting address for the page in an uncompressed code and the size of the compressed page will be stored in the predefined flash area.
3 After the compression of all the pages, the result will be concatenated into a continuous area, thus containing the whole main code compressed.
4 A final SW program will be made containing the SW launch code, paging handling code, page table and compressed main code.

### Launching the system:

This phase basically comprises the following steps:
1 SW launch code will be loaded into RAM and executed.
2 As a part of the launching task, the page table will be loaded into RAM.
3 In the next step the paging handling code will be loaded into RAM and the main code can be launched.

### Page fault:

In a paging on demand supported system, the code is executed in RAM. If an addressed page is not present in RAM, a page fault event generated, thus launching the logic that supports loading of the requested page into RAM. The following will take place according to the invention:
1 When page fault event has been generated, the paging handling code will read the page table to conclude the start address of the compressed page and the size of the compressed page.
2 The compressed page will be read and the content of the page will be decompressed.
3 The decompressed page will be loaded into RAM to the address in accordance to the paging replacing strategy.
4 The execution of the code can continue from in the loaded page.

Regarding the size of the compressed page, there are basically two methods that can be used to determine the size of the compressed page. First method is to compress the code and use the size of the compressed code as a page size. A second method is to compress the code and then adjust the size into the internal segment size of the flash guarantees better read performance than the first method. As en example, take 4 Kbyteytes original page size and optimal flash segment of 512 bytes. When compression leads to a size of 926 bytes, take still the compressed page size to be 1024 bytes thus aligning it into a segment boundary.

Many modifications can be made by a person skilled in the art. The embodiments described above are merely illustrative examples and the invention can be modified and used in many different apparatuses, systems. It is particularly advantageous for embedded systems, as a person skilled in the art realises. Therefore, the scope of the invention is defined by the appended claims only.

## Claims

1. A method for an efficient utilization of data storage resources in a data processing device comprising a CPU, a ROM-memory with stored boot code, a RAM-memory and a flash-memory, comprising the following steps:
a) creating a main program executable for said CPU,
b) dividing said main program into pages with a fixed data block size for an efficient execution in said CPU,
c) compressing said main program on a per page basis,
d) creating a pre-execution program comprising a decompression algorithm for said compressed main program,
e) storing said pre-execution program and said compressed main program in said flash memory,
f) booting said CPU by loading said boot code into said CPU from said ROM,
g) executing said pre-execution program in said CPU,
h) decompressing at least part of said main program on a per page basis and storing a number of decompressed pages in said RAM,
i) executing said main program by loading decompressed pages from said RAM-memory into said CPU.

2. The method according to claim 1, wherein said step i) further comprises the utilisation of paging on demand for said RAM-memory by using said flash memory as a virtual memory for said RAM-memory.

3. The method according to claim 1 or 2, wherein said step c) further comprises the step of creating a mapping-page-table with stored page bit size relationships of compressed/uncompressed size for each page to be used for said decompression algorithm in step d).

4. The method according to claim 1, 2 or 3, wherein said step a) further comprises the step of providing an operating system as part of said main program.

5. The method according to any of above claims, wherein said step c) is realised by an algorithm comprising a Huffman-compression algorithm.

6. A data processing device comprising a bootable CPU for executing at least a main program stored in a memory in form of program code segments of a pre-established fix length forming pages, a ROM-memory with stored code segments for booting said CPU, a RAM-memory and a flash-memory, said main program being stored in said flash memory, said flash-memory interconnected with said RAM-memory for the transfer and storage of at least some pages from said flash-memory to said RAM-memory, said CPU arranged to fetch, load and execute program code stored in said memories and to store data at least in said RAM **characterised in that** said main program is stored in said flash-memory in form of compressed pages being compressed on a per pages basis, said flash-memory further having a stored pre-execution program comprising program code means which make the CPU execute, when loaded in said CPU, a procedure realising the following steps:
- loading said pre-execution program from said flash-memory into said CPU,
- decompressing, on a per pages basis, at least part of said main program stored in said flash-memory and copying said decompressed pages into said RAM,
- executing said decompressed pages in said RAM by loading them in said CPU.

7. The data processing device according to claim 6, further **characterised in that** it is devised with program code means which make said CPU, when loaded in said CPU, execute a procedure realising the steps according to any of claims 1-5.

8. The data processing device according to claim 6 or 7 further **characterised in that** it is used in a mobile terminal.
